# DEMANDE DE BREVET EUROPEEN

(11) **EP 4 640 463 A1**
(43) Date de publication de la demande: **29.10.2025**
(21) Numéro de dépôt: 25161188.5
(22) Date de dépôt: 03.03.2025
(51) Int. Cl.: B60K 6/48, B60W 10/02, B60W 10/08, B60W 20/10

(54) **CONTRÔLE DU RÉGIME D'UNE MACHINE MOTRICE ÉLECTRIQUE D'UN VÉHICULE, PENDANT UNE PHASE DE RÉGULATION DE RÉGIME**

(30) Priorité: 25.04.2024 FR 2404277
(71) Demandeur: Stellantis Auto SAS, 78300 Poissy (FR)
(72) Inventeur: ROCQ, GAETAN, 78125 LA BOISSIERE ECOLE (FR); FEKI, HICHEM, 68390 SAUSHEIM (FR)
(74) Mandataire: PSIP

(57) **Abrégé**

Un procédé est implémenté dans un véhicule comprenant une machine motrice électrique propre à fonctionner selon un régime défini par une consigne de régime pour fournir un couple moteur, et une boîte de vitesses automatisée et comprenant au moins un arbre primaire recevant une partie au moins du couple moteur via un embrayage associé. Ce procédé comprend une étape (10-30) dans laquelle, lorsque survient une augmentation d'une demande de couple devant être reçu par l'arbre primaire utilisé, représentative d'une volonté d'accélération du conducteur, pendant une régulation du régime avec une consigne de régime précédente, on calcule une nouvelle consigne de régime égale à la somme de cette consigne de régime précédente et d'une valeur positive choisie, pour poursuivre cette régulation.

## Description

### Domaine technique de l'invention

L'invention concerne les véhicules comprenant un groupe motopropulseur (ou GMP) à machine motrice électrique et une boîte de vitesses automatisée, et plus précisément le contrôle du régime de la machine motrice électrique pendant les phases de régulation de régime.

### Etat de la technique

Certains véhicules, généralement terrestres (et éventuellement de type automobile), comprennent un groupe motopropulseur (ou GMP) au moins partiellement électrique et une boîte de vitesses automatisée.

On entend ici par « GMP au moins partiellement électrique » un GMP comportant au moins une machine motrice électrique propre à fournir du couple moteur, par exemple pour des roues motrices de son véhicule, ainsi qu'éventuellement à récupérer du couple dans son véhicule. On notera que dans ce type de GMP la machine motrice électrique est associée à une batterie rechargeable ou à une pile à combustible (par exemple à hydrogène). On notera également qu'un tel GMP peut être purement électrique ou bien peut être hybride, et dans ce dernier cas il comprend aussi une machine motrice thermique propre à fournir du couple moteur, par exemple pour des roues motrices de son véhicule.

Par ailleurs, on entend ici par « boîte de vitesses automatisée » une boîte de vitesses comportant au moins un arbre primaire associé à au moins un embrayage, et contrôlable par au moins un calculateur de boîte. Par exemple, il peut s'agir d'une boîte de vitesses à double embrayage (ou DCT (« Dual Clutch Transmission »)).

Dans certaines situations de vie d'un véhicule il est préférable, pour l'agrément de conduite, de maintenir dans son état glissant l'embrayage associé à la boîte de vitesses et en cours d'utilisation. C'est notamment le cas lorsque le véhicule circule à basse vitesse grâce au seul couple moteur fourni par la machine motrice électrique (et donc lorsque l'éventuelle machine motrice thermique ne fonctionne pas).

Comme le sait l'homme de l'art, dans ce type de situation, pour que l'embrayage utilisé ne se colle pas, il est nécessaire de piloter à la fois le régime de la machine motrice électrique et cet embrayage afin de maintenir un écart de régime non nul entre le régime de la machine motrice électrique et le régime de l'arbre primaire de la boîte de vitesses qui est associé à cet embrayage. Dans ces phases de régulation de régime, une consigne de régime est donc déterminée pour la machine motrice électrique afin qu'elle puisse adapter le couple moteur qu'elle fournit pour compenser le couple de friction de l'embrayage en cours d'utilisation et maintenir un écart de régime non nul entre son régime et le régime de l'arbre primaire utilisé.

Cependant, pendant une phase de régulation du régime, lorsque survient une augmentation de la demande de couple devant être reçu par l'arbre primaire utilisé, représentative de la volonté d'accélération du conducteur du véhicule, l'embrayage en cours d'utilisation prélève subitement un niveau de couple plus important que la dynamique du couple moteur fourni par la machine motrice électrique n'a pas le temps de compenser. Il en résulte une chute du régime de la machine motrice électrique et un collage de l'embrayage qui peuvent provoquer un choc perceptible par les passagers du véhicule.

L'invention a donc notamment pour but d'améliorer la situation pendant les phases de régulation du régime de la machine motrice électrique.

### Présentation de l'invention

Elle propose notamment à cet effet un procédé de contrôle destiné à être mis en œuvre dans un véhicule comprenant :
- un groupe motopropulseur (ou GMP) comportant une machine motrice électrique propre à fonctionner selon un régime défini par une consigne de régime pour fournir un couple moteur, et
- une boîte de vitesses automatisée et comprenant au moins un arbre primaire propre à recevoir une partie au moins du couple moteur via un embrayage associé afin de délivrer un couple de sortie pour déplacer le véhicule.

Ce procédé de contrôle se caractérise par le fait qu'il comprend une étape dans laquelle, lorsque survient une augmentation d'une demande de couple devant être reçu par un arbre primaire utilisé, représentative d'une volonté d'accélération d'un conducteur du véhicule, pendant une régulation du régime avec une consigne de régime précédente, on calcule une nouvelle consigne de régime égale à une somme de cette consigne de régime précédente et d'une valeur positive choisie, pour poursuivre cette régulation.

Grâce à l'invention, la dynamique du couple moteur (fourni par la machine motrice électrique) dispose de suffisamment de temps pour compenser le niveau de couple plus important qui est subitement prélevé par l'embrayage utilisé, ce qui permet d'éviter une chute du régime de la machine motrice électrique ou un collage de cet embrayage, et donc permet une amélioration de l'agrément de conduite et une diminution de la consommation d'énergie électrique par la machine motrice électrique.

Le procédé de contrôle selon l'invention peut comporter d'autres caractéristiques qui peuvent être prises séparément ou en combinaison, et notamment :

- dans un premier mode de réalisation, dans son étape, la valeur positive choisie peut être déterminée en fonction de l'augmentation de demande de couple ;

- en présence de ce premier mode de réalisation, dans son étape, la valeur positive choisie peut être déterminée en convertissant une dérivée temporelle de la demande de couple, représentative de l'augmentation de demande de couple ;

- en présence de la dernière sous-option, dans son étape, la dérivée temporelle peut être filtrée pour la maintenir dans un premier intervalle de valeurs choisies, afin de contrôler une variation de la valeur positive choisie dans un second intervalle de valeurs choisies ;

- également en présence de la dernière sous-option, dans son étape, la valeur positive choisie peut être déterminée dans une table établissant une correspondance entre des dérivées temporelles de demande de couple et des valeurs en tours par minute ;

- dans un second mode de réalisation, dans son étape, on peut utiliser une valeur positive choisie constante.

L'invention propose également un produit programme d'ordinateur comprenant un jeu d'instructions qui, lorsqu'il est exécuté par des moyens de traitement, est propre à mettre en œuvre un procédé de contrôle du type de celui présenté ci-avant, dans un véhicule comprenant un groupe motopropulseur (ou GMP) comportant une machine motrice électrique propre à fonctionner selon un régime défini par une consigne de régime pour fournir un couple moteur, et une boîte de vitesses automatisée et comprenant au moins un arbre primaire propre à recevoir une partie au moins du couple moteur via un embrayage associé afin de délivrer un couple de sortie pour déplacer le véhicule, pour contrôler la consigne de régime pendant une régulation du régime.

L'invention propose également un dispositif de contrôle destiné à équiper un véhicule comprenant :
- un groupe motopropulseur (ou GMP) comportant une machine motrice électrique propre à fonctionner selon un régime défini par une consigne de régime pour fournir un couple moteur, et
- une boîte de vitesses automatisée et comprenant au moins un arbre primaire propre à recevoir une partie au moins du couple moteur via un embrayage associé afin de délivrer un couple de sortie pour déplacer le véhicule.

Ce dispositif de contrôle se caractérise par le fait qu'il comprend au moins un processeur et au moins une mémoire agencés pour effectuer les opérations consistant, lorsque survient une augmentation d'une demande de couple devant être reçu par un arbre primaire utilisé, représentative d'une volonté d'accélération d'un conducteur du véhicule, pendant une régulation du régime avec une consigne de régime précédente, à calculer une nouvelle consigne de régime égale à une somme de cette consigne de régime précédente et d'une valeur positive choisie, pour poursuivre cette régulation.

Par exemple, cette valeur positive choisie peut être constante ou déterminée en fonction de l'augmentation de demande de couple.

L'invention propose également un véhicule, éventuellement de type automobile, et comprenant :
- un groupe motopropulseur (ou GMP) comportant une machine motrice électrique propre à fonctionner selon un régime défini par une consigne de régime pour fournir un couple moteur,
- une boîte de vitesses automatisée et comprenant au moins un arbre primaire propre à recevoir une partie au moins du couple moteur via un embrayage associé afin de délivrer un couple de sortie pour déplacer le véhicule, et
- un dispositif de contrôle du type de celui présenté ci-avant.

Par exemple, dans ce véhicule le GMP peut aussi comprendre une machine motrice thermique qui est propre à fournir un autre couple moteur à un dispositif de couplage propre à être couplé à la boîte de vitesses.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un dispositif de contrôle selon l'invention, et une chaîne de transmission à boîte de vitesses automatisée et GMP hybride et associé à un calculateur de supervision,
[Fig. 2] illustre schématiquement et fonctionnellement un exemple de réalisation d'un calculateur de supervision comprenant un exemple de réalisation d'un dispositif de contrôle selon l'invention, et
[Fig. 3] illustre schématiquement un exemple d'algorithme mettant en œuvre un procédé de contrôle selon l'invention.

### Description détaillée de l'invention

L'invention a notamment pour but de proposer un procédé de contrôle, et un dispositif de contrôle DC3 associé, destinés à permettre un contrôle des phases de régulation du régime r1 de la machine motrice électrique MME du groupe motopropulseur (ou GMP) d'un véhicule V, lorsque seule cette machine motrice électrique MME est en fonctionnement.

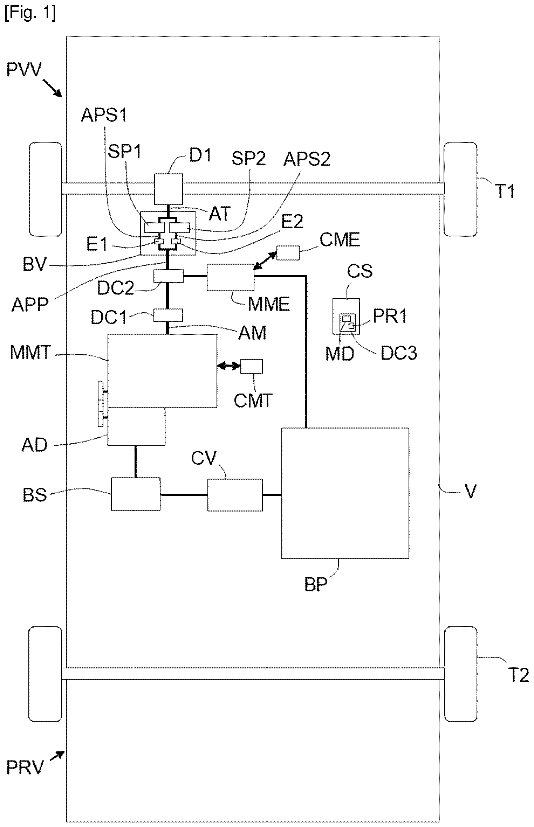

Dans ce qui suit, on considère, à titre d'exemple non limitatif, que le véhicule V est terrestre et de type automobile. Il s'agit par exemple d'une voiture, comme illustré sur la figure 1. Mais l'invention n'est pas limitée à ce type de véhicule. Elle concerne en effet tout type de véhicule (terrestre, maritime (ou fluvial), ou aérien) comprenant une chaîne de transmission à GMP au moins partiellement électrique et boîte de vitesses automatisée.

Par ailleurs, on considère dans ce qui suit, à titre d'exemple non limitatif, que le GMP est hybride (thermique et électrique). Il comprend donc au moins une machine motrice thermique MMT et au moins une machine motrice électrique MME. Mais l'invention n'est pas limitée à ce type de GMP. Elle concerne en effet tous les GMPs comportant au moins une machine motrice électrique propre à fournir du couple moteur, par exemple pour des roues motrices. Par conséquent, elle concerne également les GMPs purement électriques.

En outre, on considère dans ce qui suit, à titre d'exemple non limitatif, que la machine motrice électrique MME est associée à au moins une batterie BP rechargeable et dite principale (ou de traction ou encore de puissance). Mais elle pourrait être associée à une pile à combustible (par exemple à hydrogène).

De plus, on considère dans ce qui suit, à titre d'exemple non limitatif, que la boîte de vitesses automatisée BV est à double embrayage (ou DCT). Mais l'invention n'est pas limitée à ce type de boîte de vitesses automatisée. Elle concerne en effet toutes les boîtes de vitesses automatisées comprenant au moins un arbre primaire associé à au moins un embrayage, et contrôlable par au moins un calculateur de boîtier.

Enfin, la chaîne de transmission pourrait aussi permettre un mode quatre roues motrices (ou 4x4) ou 4x2.

On a schématiquement représenté sur la figure 1 un véhicule (terrestre) V comprenant une chaîne de transmission à GMP hybride (thermique et électrique) et boîte de vitesses BV automatisée, un calculateur de supervision CS, une batterie de servitude BS, une batterie principale (ou de traction) BP rechargeable, un convertisseur CV, et un dispositif de contrôle DC3 selon l'invention.

La batterie de servitude BS est chargée de fournir de l'énergie électrique à un réseau de bord du véhicule V, en complément de celle fournie par le convertisseur CV alimenté par la batterie principale BP via un circuit électrique principal, et parfois à la place de ce convertisseur CV. Par exemple, cette batterie de servitude BS peut être agencée sous la forme d'une batterie de type très basse tension (typiquement 12 V ou 24 V). Elle est rechargeable au moins par le convertisseur CV. On considère dans ce qui suit, à titre d'exemple non limitatif, que la batterie de servitude BS est de type Lithium-ion 12 V.

Le réseau de bord est un réseau d'alimentation électrique auquel sont couplés des équipements (ou organes) électriques (ou électroniques) qui consomment de l'énergie électrique.

Le circuit électrique principal (ou « haute tension » ou encore « de puissance ») est connecté, d'une part, à la batterie principale BP via un dispositif d'interface, et, d'autre part, à des équipements électroniques, comme par exemple le convertisseur CV et la machine motrice électrique MME. Il peut aussi éventuellement permettre la recharge de la batterie principale BP par une source d'alimentation externe et temporairement couplée au véhicule V.

Comme illustré sur la figure 1, la chaîne de transmission comprend aussi, ici, un arbre moteur AM, un premier dispositif de couplage DC1, un second dispositif de couplage DC2, et un arbre de transmission AT.

Le fonctionnement de la chaîne de transmission (et donc du GMP) est supervisé par un calculateur de supervision CS.

L'éventuelle machine motrice thermique MMT comprend un vilebrequin (non représenté) qui est solidarisé fixement à l'arbre moteur AM afin d'entraîner ce dernier (AM) en rotation. Cette machine motrice thermique MMT est propre à fournir, ici pour des roues motrices du véhicule V, un premier couple moteur cm1 qui est défini par une consigne de couple thermique, par exemple déterminée par le calculateur de supervision CS.

Le fonctionnement de la machine motrice thermique MMT est contrôlé par un calculateur de machine thermique CMT, et supervisé par le calculateur de supervision CS.

De plus, la machine motrice thermique MMT est propre à être couplée à un arbre primaire dit principal APP de la boîte de vitesses BV, via au moins le premier dispositif de couplage DC1. Ce dernier (DC1) est propre à délivrer un couple issu du premier couple moteur cm1, notamment (ici) pour au moins un train T1 de roues motrices, lorsqu'il est dans sa position fermée (ou couplée) et donc lorsqu'il couple la machine motrice thermique MMT à la boîte de vitesses BV (et plus précisément à un embrayage Ej associé à un arbre primaire (secondaire) APSj de cette dernière (BV)).

Par exemple, le premier dispositif de couplage DC1 peut être un embrayage à circuit hydraulique. Mais il pourrait être d'un autre type.

Egalement par exemple, le train T1 peut être situé dans la partie avant PVV du véhicule V. Il est de préférence, et comme illustré, couplé à l'arbre de transmission AT via un différentiel (ici avant) D1. Mais dans une variante ce train T1 pourrait être celui référencé T2 qui est situé dans la partie arrière PRV du véhicule V.

On notera que dans l'exemple illustré non limitativement sur la figure 1 le vilebrequin de la machine motrice thermique MMT est aussi couplé à une courroie, elle-même couplée à un alterno-démarreur AD qui est alimenté en énergie électrique par la batterie de servitude BS (et qui peut aussi recharger cette dernière (BS)). Ainsi, l'alterno-démarreur AD peut fournir du couple à la courroie, laquelle peut fournir ce couple au vilebrequin pour démarrer la machine motrice thermique MMT. Mais en variante ou en complément la machine motrice thermique MMT pourrait être démarrée par la machine motrice électrique MME (moyennant le placement du premier dispositif de couplage DC1 dans son état fermé).

La machine motrice électrique MME est propre, lorsqu'elle est alimentée en énergie électrique par la batterie principale BP, à fonctionner selon un premier régime r1 défini par une consigne de régime cr1 pour fournir un second couple moteur cm2, ici pour des roues motrices du véhicule V. Par exemple, la consigne de régime cr1 peut être déterminée par le calculateur de supervision CS.

On notera que la somme des premier cm1 et second cm2 couples fournis par le GMP est égale à un couple total ct.

Par ailleurs, cette machine motrice électrique MME est, ici et préférentiellement, propre à être couplée, en aval du premier dispositif de couplage DC1, par le second dispositif de couplage DC2, à l'arbre primaire principal APP de la boîte de vitesses BV pour lui fournir le second couple moteur cm2 qu'elle produit. La machine motrice électrique MME fournit donc ici le second couple moteur cm2 qu'elle produit pour le train T1.

On notera que la machine motrice électrique MME peut être aussi éventuellement agencée de manière à récupérer dans le véhicule V un couple défini par une consigne, par exemple dans une phase de freinage récupératif (ou régénératif), et dans ce cas ce couple récupéré peut servir à recharger la batterie principale BP associée à la machine motrice électrique MME. Mais la récupération peut aussi se faire sur une partie du premier couple moteur cm1 fourni par la machine motrice thermique MMT.

Le fonctionnement de la machine motrice électrique MME est contrôlé par un calculateur de machine électrique CME, et supervisé par le calculateur de supervision CS.

Le second dispositif de couplage DC2 peut, par exemple, comprendre une cascade de pignons reliant la machine motrice électrique MME à l'entrée de la boite de vitesse BV (en aval du premier dispositif de couplage DC1).

On comprendra que lorsque le premier dispositif de couplage DC1 a été placé dans son état (complétement) fermé (ou couplé) et que la machine motrice thermique MMT est en fonctionnement (et donc fournit un premier couple moteur cm1), le premier dispositif de couplage DC1 délivre un couple qui vient s'ajouter à un éventuel second couple moteur cm2 fourni, en amont de la boîte de vitesses BV, par la machine motrice électrique MME lorsqu'elle est alimentée en énergie électrique (ici) par la batterie principale BP. Lorsque le premier dispositif de couplage DC1 a été placé dans son état (complétement) ouvert (ou découplé), seule la machine motrice électrique MME peut fournir un second couple moteur cm2 en amont de la boîte de vitesses BV dans une phase de roulage purement électrique.

Par exemple, la batterie principale (ou de traction ou encore de puissance) BP peut être de type cellulaire. Dans ce cas, elle comprend des cellules de stockage d'énergie électrique, éventuellement électrochimiques (comme par exemple des cellules de type lithium-ion (ou Li-ion) ou Ni-Mh ou Ni-Cd). Egalement par exemple, cette batterie principale BP peut être de type 450 V. Mais cela n'est pas une obligation. En effet, elle pourrait en variante être de type 48 V ou 600 V, par exemple.

Comme indiqué plus haut, la boîte de vitesses BV (automatisée) comprend au moins un arbre primaire (ici dit secondaire) APSj qui est associé à au moins un embrayage Ej propre à être placé dans un état choisi parmi un état ouvert (ou découplé), un état fermé (ou couplé), et un état glissant.

Dans l'exemple illustré non limitativement sur la figure 1, la boîte de vitesses BV est à double embrayage (ou DCT), et donc elle comprend des premier APS1 (j = 1) et second APS2 (j = 2) arbres primaires dits secondaires, des premier E1 (j = 1) et second E2 (j = 2) embrayages, et des première SP1 (j = 1) et seconde SP2 (j = 2) sous-parties dédiées respectivement à des premier et second sous-ensembles de rapports (par exemple 1, 3 et 5, et 2, 4, 6 et éventuellement 7). Ces rapports ont respectivement des démultiplications décroissantes (en partant du plus petit (1)).

Les premier E1 et second E2 embrayages sont connectés à l'arbre primaire principal APP et couplés respectivement aux premier APS1 et second APS2 arbres primaires secondaires afin de leur transférer (lorsqu'ils sont dans l'état fermé ou glissant) le couple moteur qu'ils reçoivent de l'arbre primaire principal APP en provenance du GMP. Ainsi, lorsque le premier embrayage E1 est dans l'état fermé ou glissant il provoque l'entraînement en rotation du premier arbre primaire secondaire APS1 selon un second régime r21, et lorsque le second embrayage E2 est dans l'état fermé ou glissant il provoque l'entraînement en rotation du second arbre primaire secondaire APS2 selon un second régime r22.

Lorsque la boîte de vitesses BV reçoit en entrée un couple total ct (sur un arbre primaire secondaire APSj associé à l'embrayage Ej en cours d'utilisation (et donc placé dans son état fermé ou son état glissant)), et qu'elle a un rapport engagé (choisi parmi tous ses rapports), elle délivre sur sa sortie (et donc ici à l'arbre de transmission AT) un couple de sortie cs (ici pour les roues motrices du train avant T1).

On notera que dans une variante de réalisation la boîte de vitesses BV pourrait ne comporter qu'un embrayage associé à un unique arbre primaire secondaire.

Le fonctionnement de la boîte de vitesses BV est contrôlé par un calculateur de boîte CB, et supervisé par le calculateur de supervision CS.

Comme évoqué plus haut, l'invention propose notamment un procédé de contrôle destiné à permettre le contrôle des phases de régulation du premier régime r1 de la machine motrice électrique MME lorsque seule cette dernière (MME) est en fonctionnement.

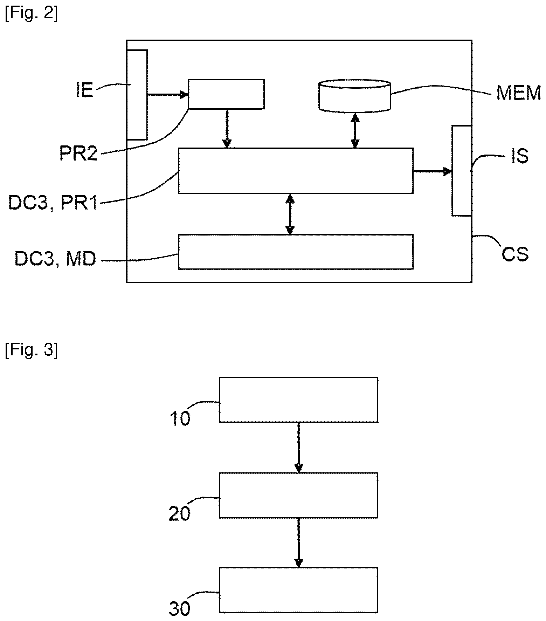

Ce procédé (de contrôle) peut être mis en œuvre au moins partiellement par le dispositif de contrôle DC3 (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de contrôle DC3 peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de contrôle. Le processeur PR1 peut comprendre des circuits intégrés (ou imprimés), ou bien plusieurs circuits intégrés (ou imprimés) reliés par des connexions filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de contrôle DC3 fait partie du calculateur de supervision CS. Mais cela n'est pas obligatoire. En effet, le dispositif de contrôle DC3 pourrait comprendre son propre calculateur dédié, lequel peut alors être couplé au calculateur de supervision CS, ou bien pourrait faire partie d'un autre calculateur embarqué dans le véhicule V et assurant au moins une autre fonction, par exemple.

Comme illustré non limitativement sur la figure 3, le procédé (de contrôle), selon l'invention, comprend une étape 10-30 qui est mise en œuvre chaque fois que deux conditions sont simultanément vérifiées, à savoir le GMP est dans une phase de régulation du premier régime r1 de sa machine motrice électrique MME et seule cette dernière (MME) est en fonctionnement.

L'étape 10-30 du procédé comprend une sous-étape 30 dans laquelle, lorsque les deux conditions précitées sont vérifiées et que survient une augmentation adc de la demande dc de couple devant être reçu par l'arbre primaire APSj utilisé, représentative de la volonté d'accélération du conducteur du véhicule V, on (par exemple le dispositif de contrôle DC3) calcule une nouvelle consigne de régime cr1 (t) qui est égale à la somme de la consigne de régime précédente cr1(t-1) et d'une valeur positive choisie vp (soit cr1(t) = cr1(t-1) + vp), pour poursuivre la régulation du premier régime r1.

Grâce à ce type de régulation du premier régime r1, lorsque survient une augmentation de la demande de couple adc on peut désormais augmenter l'écart de régime entre le premier régime r1 de la machine motrice électrique MME et le second régime r2 de l'arbre primaire (secondaire) APSj utilisé, et ainsi la dynamique du second couple moteur cm2 (fourni par la machine motrice électrique MME) dispose de suffisamment de temps pour compenser le niveau de couple plus important qui est subitement prélevé par l'embrayage Ej utilisé. Cela permet d'éviter une chute du premier régime r1 de la machine motrice électrique MME ou un collage de cet embrayage Ej, et donc permet une amélioration de l'agrément de conduite et une diminution de la consommation d'énergie électrique par la machine motrice électrique MME.

On notera que dans un véhicule terrestre V le conducteur peut signaler sa volonté d'accélération en enfonçant plus ou moins la pédale d'accélérateur (ou analogue), puis le pourcentage d'enfoncement sert à définir une demande de couple (conducteur) dc à partir de laquelle on, par exemple le calculateur de supervision CS, peut déterminer le couple devant être reçu par l'arbre primaire secondaire APSj pour satisfaire la volonté d'accélération.

On notera également que l'étape 10-30 peut comprendre, comme illustré non limitativement sur la figure 3, une sous-étape 10 dans laquelle on (par exemple le dispositif de contrôle DC3) reçoit la nouvelle demande de couple (conducteur) dc(t) et détermine l'augmentation adc en effectuant la soustraction entre cette nouvelle demande de couple (conducteur) dc(t) et la précédente demande de couple (conducteur) dc(t-1), soit adc = dc(t) - dc(t-1).

On notera également que chaque nouvelle consigne de régime cr1(t) déterminée dans une sous-étape 30, pendant une phase de régulation du premier régime r1, est transmise au calculateur de machine électrique CME afin qu'il l'utilise pour contrôler le fonctionnement de la machine motrice électrique MME.

Au moins deux modes de réalisation du procédé (et donc aussi du dispositif de contrôle DC3) peuvent être envisagés.

Dans un premier mode de réalisation, l'étape 10-30 peut comprendre, comme illustré non limitativement sur la figure 3, une sous-étape 20 dans laquelle on (par exemple le dispositif de contrôle DC3) peut déterminer la valeur positive choisie vp devant être utilisée dans la sous-étape 30. Plus précisément, dans cette sous-étape 20 on (par exemple le dispositif de contrôle DC3) peut déterminer la valeur positive choisie vp en fonction de l'augmentation de demande de couple adc reçue dans la sous-étape 10. On peut alors parler de valeur positive choisie dynamiquement vp.

Par exemple, dans la sous-étape 20 la valeur positive choisie vp peut être déterminée en convertissant la dérivée temporelle de la demande de couple dc, laquelle est représentative de l'augmentation de demande de couple adc (= dc(t) - dc(t-1)). On a en effet d(dc)/dt = adc/Δt, où Δt = t - (t-1). On comprendra que cette conversion consiste à transformer une dérivée temporelle d(dc)/dt de la demande de couple dc (en N.m/s) en une valeur positive choisie vp (en tours/minute).

Egalement par exemple, dans la sous-étape 20 la dérivée temporelle d(dc)/dt peut être filtrée afin d'être maintenue dans un premier intervalle de valeurs choisies. Cela permet, un contrôle (par exemple par le dispositif de contrôle DC3) de la variation de la valeur positive choisie vp dans un second intervalle de valeurs choisies. On notera que les valeurs choisies du premier intervalle peuvent être prédéfinies, par exemple. De même, les valeurs choisies du second intervalle peuvent être prédéfinies, par exemple.

Egalement par exemple, dans la sous-étape 20 la valeur positive choisie vp peut être déterminée dans une table de correspondance (ou cartographie) qui établit une correspondance entre des dérivées temporelles de demande de couple (d'arbre primaire secondaire) et des valeurs en tours par minute.

La table de correspondance (ou cartographie) peut être préalablement déterminée dans une phase de mise au point ou d'essai d'un véhicule similaire au véhicule V.

Dans le premier mode de réalisation, au lieu de déterminer dans la sous-étape 20 la valeur positive choisie vp au moyen d'une table de correspondance, on peut utiliser au moins une formule mathématique ayant comme variable la dérivée temporelle d(dc)/dt.

Dans un second mode de réalisation, on peut utiliser une valeur positive choisie vp qui est constante (ou prédéfinie). On comprendra que dans ce second mode de réalisation on n'a pas besoin d'effectuer la sous-étape 20, et donc l'étape 10-30 peut ne comprendre que les sous-étape 10 et 30.

On notera également, comme illustré non limitativement sur la figure 2, que le calculateur de supervision CS (ou le calculateur du dispositif de contrôle DC3) peut aussi comprendre une mémoire de masse MEM, notamment pour stocker le premier régime en cours r1 et la nouvelle demande de couple (conducteur) dc(t), ainsi que d'éventuelles données intermédiaires intervenant dans tous ses calculs et traitements. Par ailleurs, ce calculateur de supervision CS (ou le calculateur du dispositif de contrôle DC3) peut aussi comprendre une interface d'entrée IE pour recevoir le premier régime en cours r1 et la nouvelle demande de couple (conducteur) dc(t) pour les utiliser dans des calculs ou traitements, éventuellement après les avoir mis en forme et/ou démodulés et/ou amplifiés, de façon connue en soi, au moyen d'un processeur de signal numérique PR2. De plus, ce calculateur de supervision CS (ou le calculateur du dispositif de contrôle DC3) peut aussi comprendre une interface de sortie IS, notamment pour délivrer chaque message contenant la nouvelle consigne de régime cr1(t) calculée pour la régulation du premier régime r1.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de contrôle décrit ci-avant pour contrôler pendant les phases de régulation du premier régime r1 la consigne de régime cr1 lorsque seule la machine motrice électrique MME est en fonctionnement.

## Revendications

1. Procédé de contrôle pour un véhicule (V) comprenant i) un groupe motopropulseur comportant une machine motrice électrique (MME) propre à fonctionner selon un régime défini par une consigne de régime pour fournir un couple moteur, et ii) une boîte de vitesses (BV) automatisée et comprenant au moins un arbre primaire (APSj) propre à recevoir une partie au moins dudit couple moteur via un embrayage (Ej) associé afin de délivrer un couple de sortie pour déplacer ledit véhicule (V), **caractérisé en ce qu'**il comprend une étape (10-30) dans laquelle, lorsque survient une augmentation d'une demande de couple devant être reçu par un arbre primaire (APSj) utilisé, représentative d'une volonté d'accélération d'un conducteur dudit véhicule (V), pendant une régulation dudit régime avec une consigne de régime précédente, on calcule une nouvelle consigne de régime égale à une somme de ladite consigne de régime précédente et d'une valeur positive choisie, pour poursuivre ladite régulation.

2. Procédé selon la revendication 1, **caractérisé en ce que** dans ladite étape (10-30) ladite valeur positive choisie est déterminée en fonction de ladite augmentation de demande de couple.

3. Procédé selon la revendication 2, **caractérisé en ce que** dans ladite étape (10-30) ladite valeur positive choisie est déterminée en convertissant une dérivée temporelle de ladite demande de couple, représentative de ladite augmentation de demande de couple.

4. Procédé selon la revendication 3, **caractérisé en ce que** dans ladite étape (10-30) ladite dérivée temporelle est filtrée pour la maintenir dans un premier intervalle de valeurs choisies, afin de contrôler une variation de ladite valeur positive choisie dans un second intervalle de valeurs choisies.

5. Procédé selon la revendication 3 ou 4, **caractérisé en ce que** dans ladite étape (10-30) ladite valeur positive choisie est déterminée dans une table établissant une correspondance entre des dérivées temporelles de demande de couple et des valeurs en tours par minute.

6. Procédé selon la revendication 1, **caractérisé en ce que** dans ladite étape (10-30) on utilise une valeur positive choisie constante.

7. Produit programme d'ordinateur comprenant un jeu d'instructions qui, lorsqu'il est exécuté par des moyens de traitement, est propre à mettre en œuvre le procédé de contrôle selon l'une des revendications 1 à 5, dans un véhicule (V) comprenant i) un groupe motopropulseur comportant une machine motrice électrique (MME) propre à fonctionner selon un régime défini par une consigne de régime pour fournir un couple moteur, et ii) une boîte de vitesses (BV) automatisée et comprenant au moins un arbre primaire (APSj) propre à recevoir une partie au moins dudit couple moteur via un embrayage (Ej) associé afin de délivrer un couple de sortie pour déplacer ledit véhicule (V), pour contrôler ladite consigne de régime pendant une régulation dudit régime.

8. Dispositif de contrôle (DC3) pour un véhicule (V) comprenant i) un groupe motopropulseur comportant une machine motrice électrique (MME) propre à fonctionner selon un régime défini par une consigne de régime pour fournir un couple moteur, et ii) une boîte de vitesses (BV) automatisée et comprenant au moins un arbre primaire (APSj) propre à recevoir une partie au moins dudit couple moteur via un embrayage (Ej) associé afin de délivrer un couple de sortie pour déplacer ledit véhicule (V), **caractérisé en ce qu'**il comprend au moins un processeur (PR1) et au moins une mémoire (MD) agencés pour effectuer les opérations consistant, lorsque survient une augmentation d'une demande de couple devant être reçu par un arbre primaire (APSj) utilisé, représentative d'une volonté d'accélération d'un conducteur dudit véhicule (V), pendant une régulation dudit régime avec une consigne de régime précédente, à calculer une nouvelle consigne de régime égale à une somme de ladite consigne de régime précédente et d'une valeur positive choisie, pour poursuivre ladite régulation.

9. Véhicule (V) comprenant i) un groupe motopropulseur comportant une machine motrice électrique (MME) propre à fonctionner selon un régime défini par une consigne de régime pour fournir un couple moteur, et ii) une boîte de vitesses (BV) automatisée et comprenant au moins un arbre primaire (APSj) propre à recevoir une partie au moins dudit couple moteur via un embrayage (Ej) associé afin de délivrer un couple de sortie pour déplacer ledit véhicule (V), **caractérisé en ce qu'**il comprend en outre un dispositif de contrôle (DC3) selon la revendication 8.

10. Véhicule selon la revendication 9, **caractérisé en ce que** ledit groupe motopropulseur comprend en outre une machine motrice thermique (MMT) propre à fournir un autre couple moteur à un dispositif de couplage (DC1) propre à être couplé à ladite boîte de vitesses (BV).
